# FASCICULE DE BREVET EUROPEEN

(11) **EP 1 584 845 B1**
(45) Date de publication et mention de la délivrance du brevet: **07.03.2007**
(21) Numéro de dépôt: 05354002.7
(22) Date de dépôt: 11.01.2005
(51) Int. Cl.: F16H 55/46, B61B 12/00

(54) **Poulie pour une installation de transport par câbles**
Kabelrolle
Pulley for cable

(30) Priorité: 27.02.2004 FR 0402042
(43) Date de publication de la demande: 12.10.2005
(73) Titulaire: POMAGALSKI S.A., 38600 Fontaine (FR)
(72) Inventeur: Marten-Perolino Matteo, 38000 Grenoble (FR); Tamisier, Franckie, 38330 Saint Nazaire Les Eymes (FR)
(74) Mandataire: Hecké, Gérard

(56) Documents cités:
- EP-A- 1 099 880
- GB-A- 140 720
- US-A- 1 331 173
- US-A- 2 730 906
- US-A- 4 193 311

## Description

### Domaine technique de l'invention

L'invention est relative à une poulie pour une installation de transport par câble, comprenant :
- un moyeu de section circulaire pour le passage d'un arbre,
- une jante périphérique à gorge annulaire de logement du câble, ladite jante étant reliée au moyeu par une ossature métallique de liaison composée d'un disque central ajouré, renforcé par des bras de rigidification,
- et des éléments de fixation pour assembler différentes parties élémentaires de l'ossature et de la jante entre elles.

### Etat de la technique

Le document EP 1099880, qui montre toutes les caractéristiques du préambule de la revendication 1, il se rapporte à une poulie du genre mentionné, dans laquelle les deux lignes de division des différentes parties s'étendent selon des sécantes parallèles l'une à l'autre, et agencées radialement de part et d'autre du moyeu. Une telle structure divisée de la poulie occasionne lors de la rotation, une variation de la résistance mécanique en fonction de la position angulaire de la jante par rapport à l'axe du moyeu. Les éléments de fixation doivent supporter des efforts de cisaillement importants.

### Objet de l'invention

L'objet de l'invention consiste à réaliser une poulie subdivisée en plusieurs parties réassemblables sur le site, et bénéficiant d'une résistance mécanique élevée pour l'entraînement d'une installation de transport par câble.

Le dispositif selon l'invention est caractérisé en ce que la jante est subdivisée radialement en plusieurs segments circulaires assemblés les uns aux autres par des premiers éléments de fixation, et que le moyeu est solidarisé à un boîtier support comprenant au moins une platine de section polygonale, délimitant aux extrémités des surfaces d'appui pour le disque central et les bras de rigidification radiaux assemblés par des deuxièmes éléments de fixation. L'ensemble contribue à répartir uniformément les efforts radiaux, indépendamment de la position angulaire de la poulie par rapport au câble.

Selon un mode de réalisation préférentiel, la jante est subdivisée en au moins quatre segments périphériques réunis au disque central par des brides de raccordement recevant les premiers éléments de fixation. Le boîtier support est formé par deux platines coaxiales constituant un caisson central en forme de polygone régulier coopérant dans le plan médian de l'axe du câble avec le disque de l'ossature pour la répartition uniforme des efforts.

La poulie est subdivisée en cinq parties élémentaires comprenant, en plus du module standard, quatre segments de quarts de jante équipés chacun de deux paires de bras de rigidification et d'un secteur de disque.

D'autres caractéristiques peuvent être utilisées isolément ou en combinaison :
- le boîtier support comporte un pourtour octogonal délimitant huit surfaces d'appui destinées à recevoir les deuxièmes éléments de fixation de l'ossature de liaison ;
- le moyeu est soudé au boîtier support pour constituer un module standard non divisible,
- le boîtier support comporte une seule platine disposée dans le plan médian de l'axe du câble avec le disque de l'ossature.

D'autres avantages et caractéristiques ressortiront plus clairement de la description qui va suivre d'un mode de réalisation de l'invention donné à titre d'exemple non limitatif, et représenté aux dessins annexés, dans lesquels:

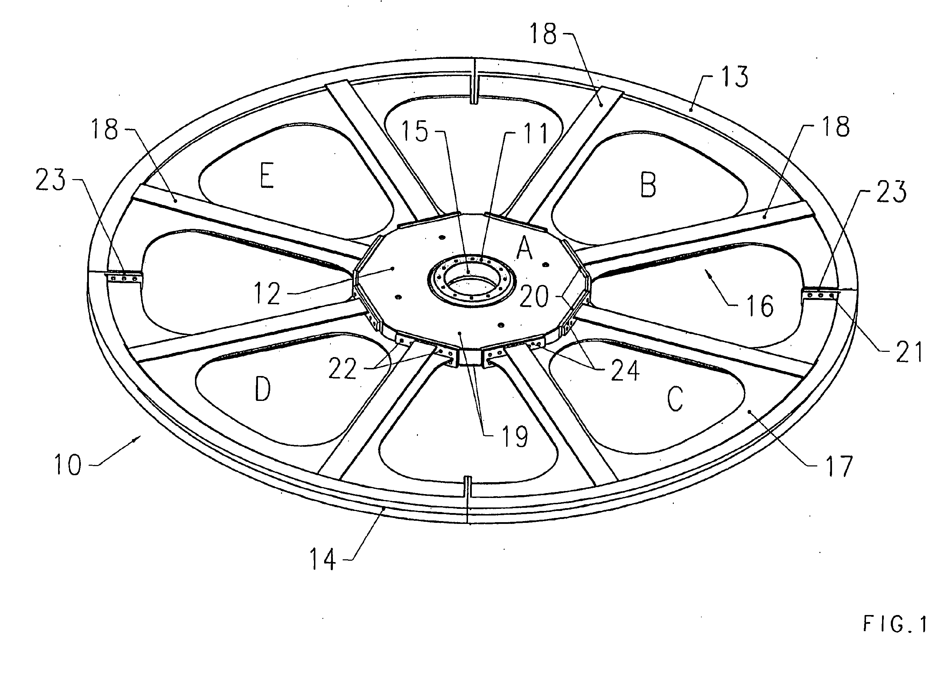

- la figure 1 est une vue en perspective de la poulie selon l'invention, après assemblage final des différentes parties de sa structure ;

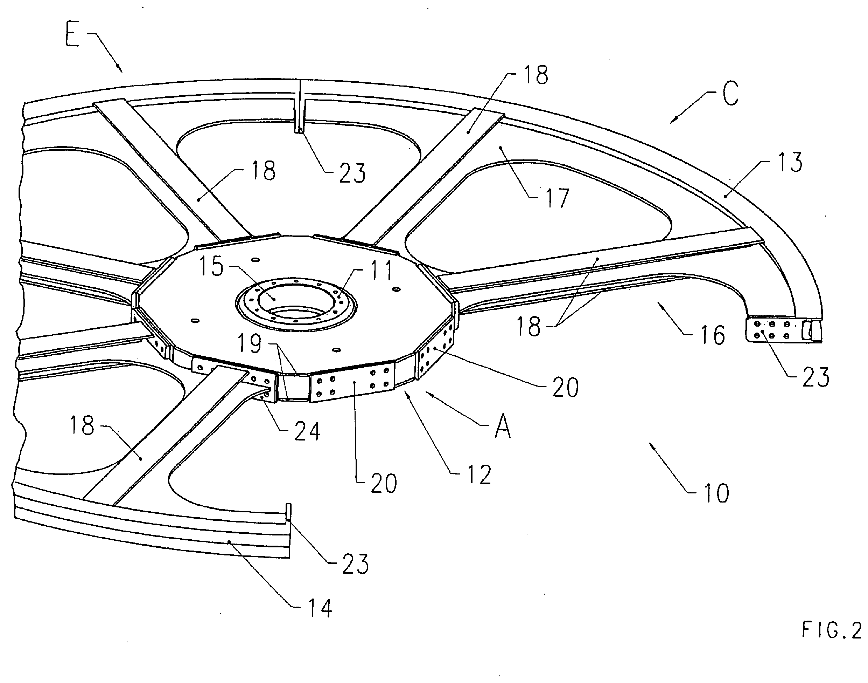

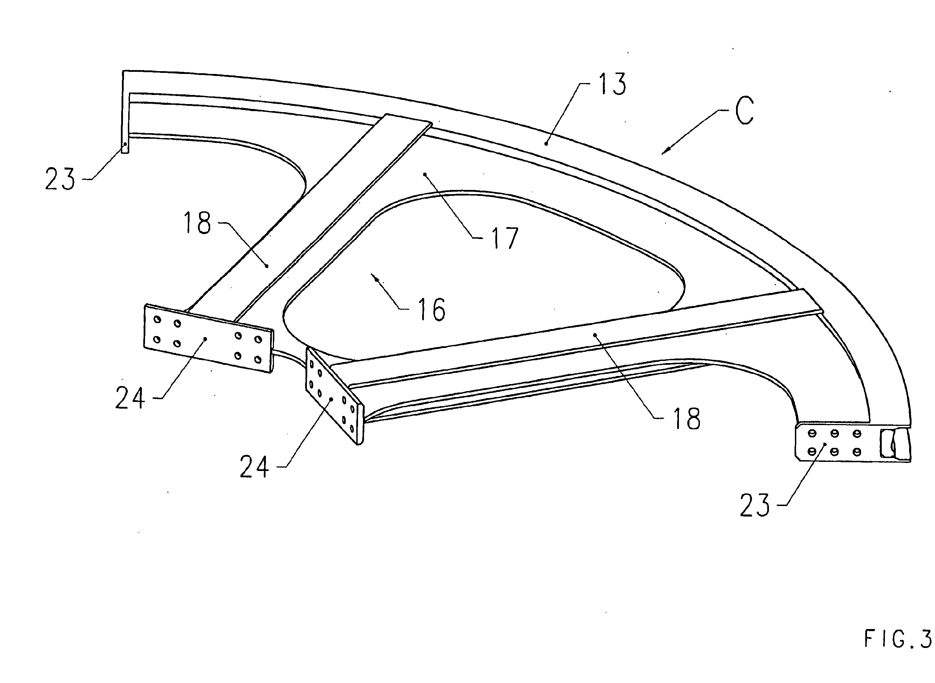

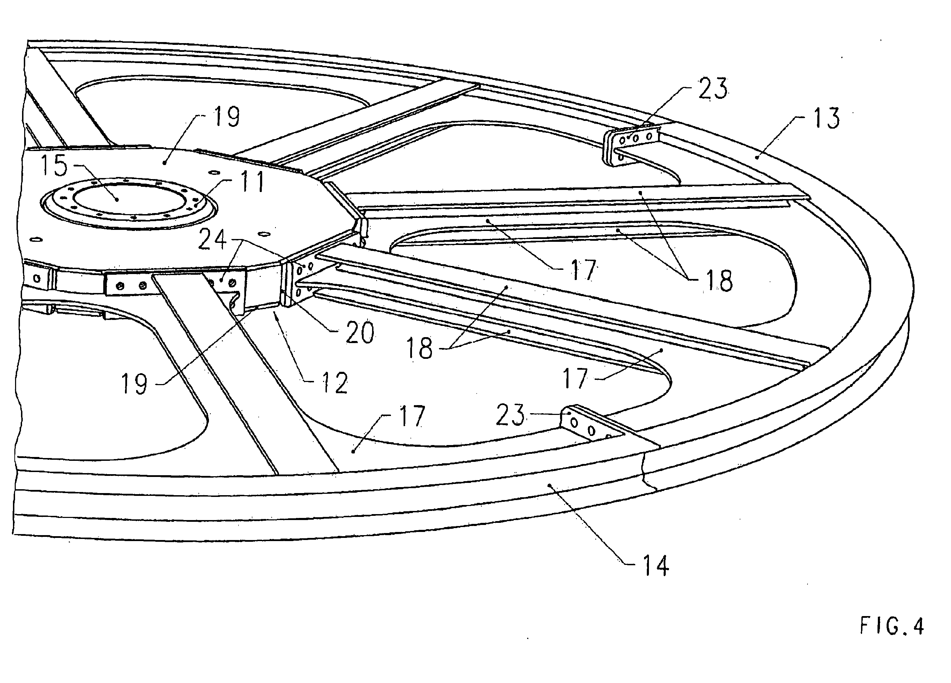

- les figures 2 à 4 montrent des vues partielles de la figure 1 ;
- les figures 5A à 5E, sont des vues en élévation d'une gamme de poulies de différents diamètres, et équipées avec le même module central du moyeu et du boîtier support ;
- la figure 6 représente une vue de profil de la figure 5B.

### Description d'un mode de réalisation préférentiel.

En référence aux figures, une poulie 10 pour une installation de transport par câbles, notamment un télésiège ou une télécabine, est subdivisée en plusieurs parties A-E démontables pour le transport, et réassemblables sur le site.

La poulie 10 peut être une poulie d'extrémité (motrice ou de tension), ou une poulie de renvoi.

La poulie 10 comporte un moyeu 11 circulaire fixé dans un boîtier support 12 central, et une jante 13 périphérique munie d'une gorge 14 annulaire pour le logement du câble de l'installation de transport.

Le moyeu 11 est constitué par un corps monobloc, ayant un alésage 15 interne de section circulaire pour le passage de l'arbre rotatif du groupe moteur d'entraînement. Le corps du moyeu 11 est solidarisé par soudage au boîtier support 12, l'ensemble constituant un module standard non divisible.

La jante 13 est reliée au moyeu 11 par une ossature 16 métallique de liaison composée d'un disque 17 central ajouré, renforcé par des bras de rigidification 18 s'étendant en étoile selon des directions radiales. La jante 13 est subdivisée radialement en plusieurs segments circulaires jointifs, assemblés les uns aux autres et au disque 17 par des brides 23 traversées par des premiers éléments de fixation 21. Les brides 23 s'étendent radialement avec des décalages angulaires de 90° dans quatre zones de raccordement des segments de jante et du disque 17.

Le boîtier support 12 comprend une paire de platines 19 coaxiales de sections polygonales, délimitant sur le pourtour des surfaces d'appui 20 pour le disque 17 central et les bras de rigidification 18 radiaux. Les bras 18 sont disposés parallèlement de part et d'autre du disque 17, et sont formés par des profilés en H dotés à leurs extrémités de patins 24 d'assemblage, lesquels sont assujettis aux surfaces d'appui 20 par des deuxièmes éléments de fixation 22. Les premiers et deuxièmes éléments de fixation 21, 22 sont formés par des boulons, ou des moyens d'assemblage équivalents.

A titre d'exemple, l'ossature 16 de liaison comporte huit paires de bras de rigidification 18 associées au disque 17 central, et la jante 13 est subdivisée en quatre segments. Dans ce cas, le boîtier support 12 comprend un pourtour octogonal, et la poulie 10 est formée par cinq parties A, B, C, D, E réassemblables, comprenant :
- le module standard non divisible de l'ensemble moyeu 11 et boîtier support 12 constituant la partie A;
- quatre segments de quarts de jante équipés chacun de deux paires de bras 18, et d'un secteur de disque, constituant les parties identiques B-E.

II est clair qu'un nombre différent de bras 18 peut être utilisé en fonction du nombre de côtés du polygone régulier du boîtier support 12.

La majorité des efforts exercés par la tension du câble sur la poulie 10 est encaissée par le disque 17 central agencé dans l'axe du câble et dans le plan médian de symétrie des platines 19 du boîtier support 12. L'ensemble des bras de rigidification 18 reprend également une fraction moins importante des efforts. L'ossature 16 de liaison contribue à répartir uniformément les efforts radiaux sur le boîtier support 12 polygonal, indépendamment de la position angulaire de à poulie. Il en résulte une résistance mécanique optimum après assemblage des parties A-E, et mise en place des premiers et deuxièmes éléments de fixation 21, 22.

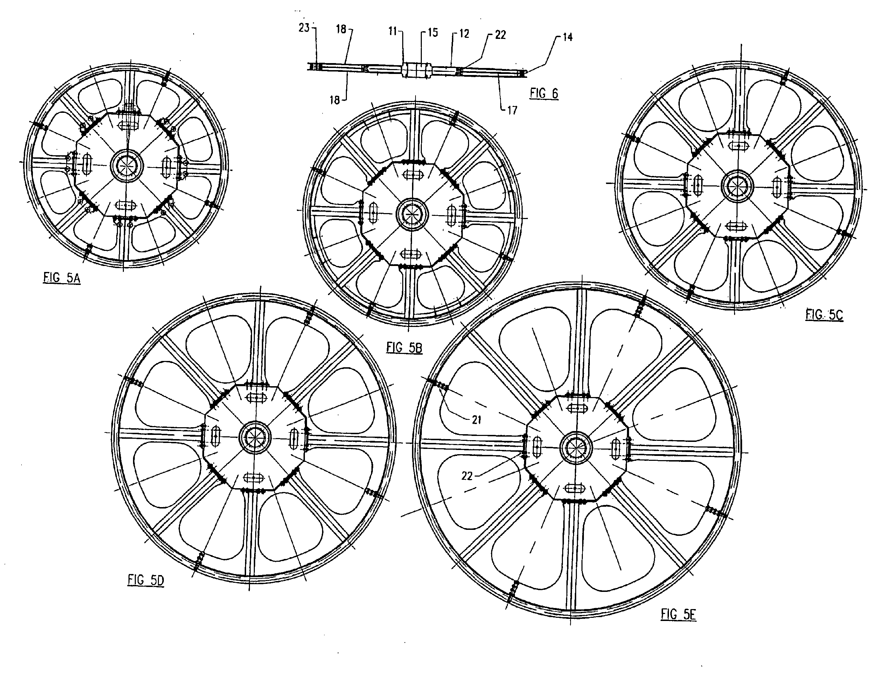

Sur les figures 5A à 5E, une gamme de cinq poulies 10 selon l'invention montre que l'ensemble moyeu 11 et boîtier support 12 constitue un même module standard indépendamment du diamètre extérieur de la poulie. Il suffit de changer les rayons des bras 18, et les dimensions des segments de la jante 13 et du disque 17.

Le module central standard de la partie A peut être avantageusement prémonté en usine sur le châssis de la gare de départ, ce qui facilite le montage des quatre autres parties B-E de la poulie 10 sur le site. Pour le transport de la poulie 10 depuis l'usine, il suffit d'expédier séparément sur le site les quatre parties détachées de l'ossature 16 et de la jante 13, ce qui réduit les frais de transport.

Le nombre de poulies de la gamme peut bien entendu être quelconque selon les diamètres choisis.

Au lieu de prévoir un caisson central à deux platines 19 coaxiales, il est également possible de faire usage d'une seule platine 19 disposée dans le plan médian de l'axe du câble avec le disque 17 de l'ossature 16.

## Revendications

1. Poulie (10) pour une installation de transport par câble, comprenant :
- un moyeu (11) de section circulaire pour le passage d'un arbre,
- une jante (13) périphérique à gorge (14) annulaire de logement du câble, ladite jante (13) étant reliée au moyeu (11) par une ossature (16) métallique de liaison composée d'un disque (17) central ajouré, renforcé par des bras de rigidification (18),
- et des éléments de fixation pour assembler différentes parties élémentaires de l'ossature (16) et de la jante (13) entre elles,
**caractérisée en ce que :**
- la jante (13) est subdivisée radialement en plusieurs segments circulaires assemblés les uns aux autres par des premiers éléments de fixation (21),
- le moyeu (11) est solidarisé à un boîtier support (12) comprenant au moins une platine (19) de section polygonale, équipée d'une pluralité de surfaces d'appui (20) pour le disque (17) central et les bras de rigidification (18) radiaux assemblés par des deuxièmes éléments de fixation (22), l'ensemble étant agencé pour répartir uniformément les efforts radiaux, indépendamment de la position angulaire de la poulie (10) par rapport au câble.

2. Poulie (10) selon la revendication 1, **caractérisée en ce que** le boîtier support (12) comporte une paire de platines (19) coaxiales formant un caisson central.

3. Poulie (10) selon la revendication 1, **caractérisée en ce que** le boîtier support (12) comporte une platine (19) disposée dans le plan médian de l'axe du câble avec le disque (17) de l'ossature (16).

4. Poulie (10) selon la revendication 2 ou 3, **caractérisée en ce que** le boîtier support (12) est en forme de polygone régulier coopérant dans le plan médian de l'axe du câble avec le disque (17) de l'ossature (16) pour la répartition uniforme des efforts.

5. Poulie (10) selon la revendication 4, **caractérisée en ce que** le boîtier support (12) comporte un pourtour octogonal délimitant huit surfaces d'appui (20) destinées à recevoir les deuxièmes éléments de fixation (22) de l'ossature (16) de liaison.

6. Poulie (10) selon l'une des revendications 1 à 5, **caractérisée en ce que** les bras de rigidification (18) sont répartis en étoile à intervalles angulaires réguliers de part et d'autre du disque (17), et sont formés par des profilés métalliques dotés à leurs extrémités de patins (24) d'assemblage fixés aux surfaces d'appui (20) du boîtier support (12) par les deuxièmes éléments de fixation (22).

7. Poulie (10) selon la revendication 1, **caractérisée en ce que** le moyeu (11) est soudé au boîtier support (12) pour constituer un module standard non divisible.

8. Poulie (10) selon la revendication 7, **caractérisée en ce que** la poulie (10) est subdivisée en cinq parties élémentaires (A-E) comprenant, en plus du module standard, quatre segments identiques de quarts de jante équipés chacun de deux paires de bras de rigidification(18) et d'un secteur de disque (17).

9. Poulie (10) selon la revendication 1, **caractérisée en ce que** la jante (13) est subdivisée en n segments périphériques réunis au disque (17) central par des brides (23) de raccordement recevant les premiers éléments de fixation (21).

## Claims

1. Bull-wheel (10) for a rope transport installation, comprising:
- a hub (11) of circular cross-section for passage of a shaft,
- a peripheral rim (13) with an annular groove (14) for housing the rope, said rim (13) being joined to the hub (11) by a metal connecting framework (16) composed of a perforated central disk (17) strengthened by rigidifying arms (18),
- and fixing members to assemble different elemental parts of the framework (16) and of the rim (13) to one another,
**characterized in that**:
- the rim (13) is radially subdivided into several circular segments assembled to one another by first fixing members (21),
- the hub (11) is fixedly secured to a support enclosure (12) comprising at least one plate (19) of polygonal cross-section equipped with a plurality of bearing surfaces (20) for the central disk (17) and the radial rigidifying arms (18) assembled by second fixing members (22), the assembly being arranged so as to distribute the radial forces uniformly regardless of the angular position of the bull-wheel (10) with respect to the rope.

2. Bull-wheel (10) according to claim 1, **characterized in that** the support enclosure (12) comprises a pair of coaxial plates (19) forming a central housing.

3. Bull-wheel (10) according to claim 1, **characterized in that** the support enclosure (12) comprises a plate (19) arranged in the mid-plane of the axis of the rope with the disk (17) of the framework (16).

4. Bull-wheel (10) according to claim 2, **characterized in that** the support enclosure (12) is of regular polygonal shape co-operating in the mid-plane of the axis of the rope with the disk (17) of the framework (16) for uniform distribution of the forces.

5. Bull-wheel (10) according to claim 4, **characterized in that** the support enclosure (12) comprises an octagonal periphery defining eight bearing surfaces (20) designed to receive the second fixing members (22) of the connecting framework (16).

6. Bull-wheel (10) according to claim 1, **characterized in that** the rigidifying arms (18) are arranged in the form of a star at regular angular intervals on each side of the disk (17) and are formed by metal sections equipped at their ends with assembly pads (24) fixed to the bearing surfaces (20) of the support enclosure (12) by the second fixing members (22).

7. Bull-wheel (10) according to claim 1, **characterized in that** the hub (11) is welded to the support enclosure (12) to constitute an undividable standard module.

8. Bull-wheel (10) according to claim 7, **characterized in that** the bull-wheel (10) is subdivided into five elemental parts (A-E) comprising, in addition to the standard module, four identical quarter-rim segments each equipped with two pairs of rigidifying arms (18) and with a disk sector (17).

9. Bull-wheel (10) according to claim 1, **characterized in that** the rim (13) is subdivided into n peripheral segments joined to the central disk (17) by connecting flanges (23) receiving the first fixing members (21).

## Patentansprüche

1. Antriebsscheibe (10) für eine Seilfördervorrichtung, die umfasst:
- eine Nabe (11) mit kreisrundem Querschnitt zur Durchführung einer Welle,
- eine umlaufende Felge (13) mit einer ringförmigen Nut (14) zur Unterbringung eines Seils, welche Felge (13) mit der Nabe (11) über einen Metallverbindungsrahmen (16) verbunden ist, der aus einer zentralen, durchbrochenen Scheibe (17) besteht, die durch Versteifungsarme (18) verstärkt ist,
- und Befestigungselemente zum Verbinden unterschiedlicher Elementarteile des Rahmens (16) und der Felge (13) miteinander,
**dadurch gekennzeichnet, dass**
- die Felge (13) in Radialrichtung in mehrere kreisförmige Segmente unterteilt ist, die miteinander jeweils durch erste Befestigungselemente (21) verbunden sind,
- die Nabe (11) fest mit einem Stützgehäuse (12) verbunden ist, das mindestens eine Platte (19) mit polygonalem Querschnitt umfasst, die mit mehreren Auflageflächen (20) für die zentrale Scheibe (17) versehen ist, und wobei die radialen Versteifungsarme (18) durch zweite Befestigungselemente (22) verbunden sind und das Ganze so angeordnet ist, dass die Radialkräfte homogen verteilt werden, und zwar unabhängig von der Winkellage der Antriebsscheibe (10) bezüglich dem Seil.

2. Antriebsscheibe (10) nach Anspruch 1, **dadurch gekennzeichnet, dass** das Stützgehäuse (12) ein Paar koaxialer Platten (19) umfasst, die einen zentralen Kasten bilden.

3. Antriebsscheibe (10) nach Anspruch 1, **dadurch gekennzeichnet, dass** das Stützgehäuse (12) eine Platte (19) umfasst, die auf der Mittelebene der Achse des Seils mit der Scheibe (17) des Rahmens (16) angeordnet ist.

4. Antriebsscheibe (10) nach Anspruch 2 oder 3, **dadurch gekennzeichnet, dass** das Stützgehäuse (12) die Form eines gleichmäßigen Polygons hat, das auf der Mittelebene der Achse des Seils mit der Scheibe (17) des Rahmens (16) zur homogenen Verteilung der Kräfte zusammenwirkt.

5. Antriebsscheibe (10) nach Anspruch 4, **dadurch gekennzeichnet, dass** das Stützgehäuse (12) einen achteckigen Umfang hat, der acht Auflageflächen (20) begrenzt, die die zweiten Befestigungselemente (22) des Verbindungsrahmens (16) aufnehmen sollen.

6. Antriebesscheibe nach einem der Ansprüche 1 bis 5, **dadurch gekennzeichnet, dass** die Versteifungsarme (18) in gleichmäßigen Winkelabständen beidseits der Scheibe (17) sternförmig verteilt sind und von Metallprofilen gebildet werden, die an ihren Enden mit Befestigungsbacken (24) versehen sind, die an den Auflageflächen (20) des Stützgehäuses (12) mittels der zweiten Befestigungselemente (22) befestigt sind.

7. Antriebsscheibe (10) nach Anspruch 1, **dadurch gekennzeichnet, dass** die Nabe (11) an das Stützgehäuse (12) geschweißt ist, um ein nicht trennbares Standardmodul zu bilden.

8. Antriebsscheibe (10) nach Anspruch 7, **dadurch gekennzeichnet, dass** die Antriebsscheibe (10) in fünf elementare Teile (A-E) unterteilt ist, die zusätzlich zu dem Standardmodul vier identische Felgenviertel-Segmente umfassen, die jeweils mit zwei Paaren Versteifungsarmen (18) und einem Abschnitt der Scheibe (17) versehen sind.

9. Antriebsscheibe (10) nach Anspruch 1, **dadurch gekennzeichnet, dass** die Felge (13) in n umfängliche Segmente unterteilt ist, die mit der zentralen Scheibe (17) durch Anschlussflansche (23) verbunden sind, die die ersten Befestigungselemente (21) aufnehmen.
